# EUROPEAN PATENT APPLICATION

(11) **EP 1 338 947 A1**
(43) Date of publication of application: **27.08.2003**
(21) Application number: 02354034.7
(22) Date of filing: 22.02.2002
(51) Int. Cl.: G06F 1/32, G06F 1/00

(54) **A power state sub-system and a method of changing the power state of a selected computer system**

(71) Applicant: Hewlett-Packard Company, Palo Alto, CA 94304 (US)
(72) Inventor: Chiteboun, Thierry, 38120 St Egreve (FR); Puyo, Cécile, 38190 Bernin (FR)
(74) Representative: Lloyd, Richard Graham

(57) **Abstract**

A computer system, a power state sub-system, operative to change the system's power state, the sub-system having a receiver operative to receive wireless control instructions and a control element operative, in response to such instructions, to effect a change in the system's power state. The receiver may be powered independently of the computer system, whereby its ability to receive control instructions is unaffected by the system's power state.

## Description

### Background to the Invention and Summary of the Prior Art

This invention relates to the general field of computer systems and relates, in particular, although not exclusively, to the field of power state subsystems which are operative to control the various power states that the system is able to adopt.

In recent years, many advances have been made concerning power management systems and associated power states that allow the power consumption of a computer system (e.g. a PC system) to be optimised in accordance with the demands placed on the system at a given time. The ACPI (Advanced Configuration and Power Interface) system provides an efficient power management system which allows a suitably-equipped PC, for example, to adopt one of a number of industry-defined power states in response to peripheral demands or user actions. The ACPI power states (also known as sleep states) range from S0, in which the CPU is operating normally, and in which a relatively high amount of power is consumed, to S5, in which no power is supplied to the CPU and in which the overall amount of power required by the system is very low (typically less than 5 watts). The S1, S2, S3 and S4 states reflect progressively lower degrees of CPU activity and overall power consumption, with transitions between the states typically occurring when the associated computer has been idle for a specific length of time or when a peripheral device requests the system to adopt a higher (i.e. increased activity) power state to allow the device to function correctly.

In industrial environments, where several (perhaps very many) computer systems are running side-by-side, the overall power consumption, when each system is operating at or near its full capacity, can be considerable. Similarly, a "fully on" PC, when connected to a network, can contribute to a decrease in the rate of flow of network traffic, with a primary object of the present invention thus being to provide a power state sub-system that is readily controllable in order to overcome or at least reduce these and other problems.

It is also an object of the present invention to provide a method of changing the power state of a selected computer system that is readily useable in industrial environments where access to the system hardware may be restricted.

### Summary of the Invention

In accordance with a first aspect of the present invention, there is provided, in a computer system, a power state sub-system, operative to change the system's power state, the sub-system having a receiver operative to receive wireless control instructions and a control element operative, in response to such instructions, to effect a change in the system's power state.

The receiver may be powered independently of the computer system, whereby its ability to receive control instructions is unaffected by the system's power state.

The control instructions may specify a particular power state to which a transition is required. Preferably, however, the change in power state involves a toggle between defined power states. In this way, a single control instruction may be used to effect transitions between upper and lower power states.

Whichever approach is used, the lower power state preferably is one in which the system context is saved. Thus, when the system adopts the lower power state, the software context (i.e. status and content of any applications running) is recorded, thus allowing the context to be restored when the higher power state is resumed.

The system context may be saved to a system memory, preferably a volatile system memory such as RAM. Alternatively, the system context may be saved to a non-volatile storage device such as a hard disk drive (HDD).

The change in the system's power state may be effected using a ring indicator RI, USB or other such power management event (PME) signal. In this way, a receiver may be connected to an appropriate serial, parallel or USB port with a predetermined signal generated by, or on the instruction of, the receiver, being sent to the port concerned.

The wireless control instructions may include an identifier with the system's power state only being changed where the identifier is recognised.

In this way, erroneous changes in a system's power state may be avoided by requiring, in the control instructions, the presence of an identifier or tag without which no change can be effected.

The identifier may be variable in accordance with a user's actions, whereby a user may selectively change the power state of one of a plurality of computer systems.

The control instruction may be transmitted using an infrared or a radio frequency carrier.

In accordance with a second aspect of the present invention, there is provided, in a plurality of computer systems, a method of changing the power state of a selected system, comprising generating a control instruction and effecting a wireless transmission of the control instruction towards a receiver, whereby a control element, in response to the instruction, effects a change in the selected system's power state, the control instruction including a system identifier such that the power state change is effected in the selected system.

The system identifier may be variable in accordance with a user's actions, whereby a user may selectively change the power state of one or more of the systems.

The control instruction may be transmitted using an infrared or a radio frequency carrier.

The invention, in its second aspect, may comprise one or more of the features described in relation to the first aspect.

### Brief Description of the Drawings

The invention will now be described in greater detail, but strictly by way of example only, by reference to the accompanying drawings, of which:
FIGURE 1 is a schematic illustration of a computer system and a number of available power states;
FIGURE 2 shows an infrared receiver connected to a computer system in a number of different ways;
FIGURE 3 is a flow diagram illustrating how the power state sub-system is initialised; and

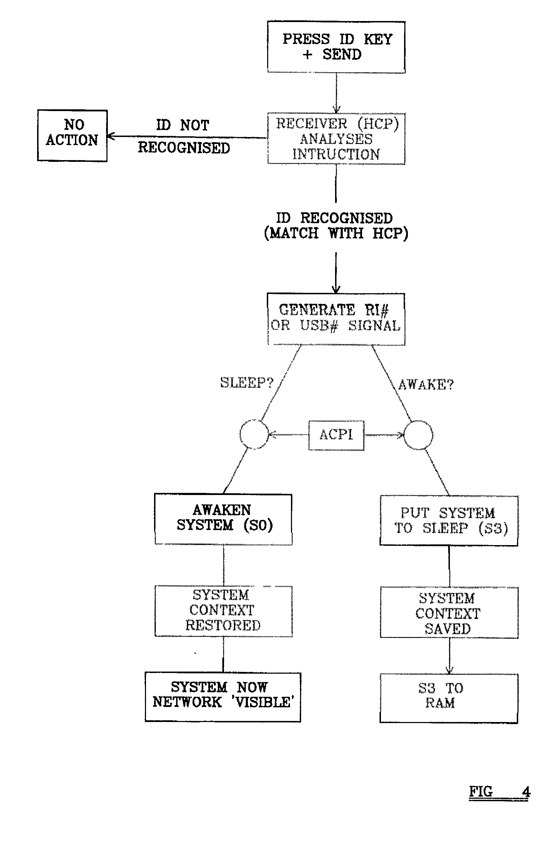

FIGURE 4 is a flow diagram showing how the power state sub-system operates, once initialised.

### Detailed Description of the Drawings and Best Mode of the Invention

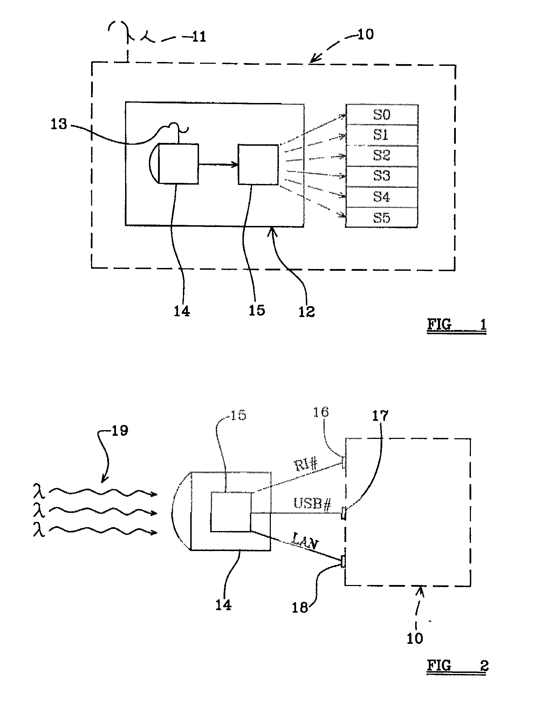

Figure 1 shows a computer system 10, powered from a mains outlet 11, and a power state sub-system 12, itself powered from a separate mains outlet 13. The computer system 10 is intended to represent the key aspects of a PC, whose operation is influenced by the power state adopted by the system at a given time. However, the computer system 10 is not to be interpreted simply as referring to computer (e.g. PC) systems per se, but is intended also to encompass computerised systems such as those that may be found in a variety of devices such as printers, scanners, copiers, servers, fax machines and the like.

In generally conventional manner, the computer system is able to adopt one of a plurality of discrete power states (S0, S1, S2, S3, S4 and S5) such as are defined, from time to time, by industry-wide standards. The S0 to S5 power states (also known as sleep states) are currently defined by the ACPI (Advanced Configuration and Power Interface) standard, with the S0 sleep state representing the highest level of system activity and S5 the lowest. These states, which are entered into in accordance with Operating System instructions, are all potentially available, although it is envisaged, in the present invention, that a toggle between the S0 and S3 states is likely to be the most convenient. This is because the S0 state (the so-called "working" state) will most commonly be employed, and because the S3 state (in which the system [e.g. software] context is saved to RAM) is commonly adopted - and hence accessable - using popular operating systems such as Microsoft Windows® Millennium Edition, Windows 2000 and Windows XP.

Broadly speaking, the power state sub-system 12 features a receiver 14 and a control element 15 which, in response to wireless instructions received by the receiver 14, effects a change in the system's power state, as explained in more detail below. In the example shown, the receiver 14 is a standalone infrared receiver, although it will be understood that other wireless carriers (such as RF) could similarly be employed.

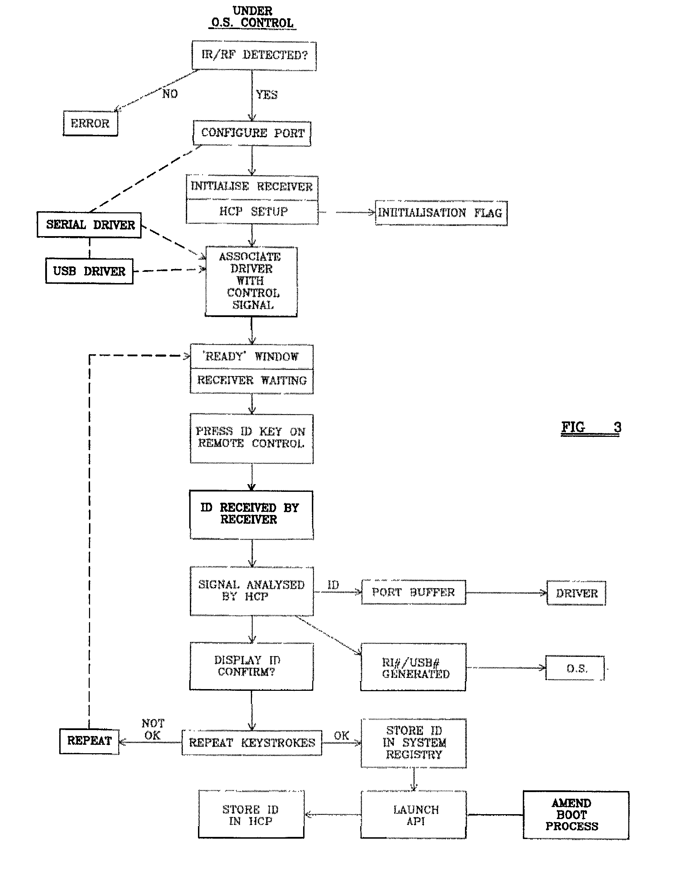

Figure 2 illustrates how the receiver 14 may be connected to the computer system 10. In brief, control signals may be sent from the control element 15 to the system 10 via a standard serial (COM) port 16, a USB port 17 or via a network (LAN) port 18. The different types of control signal are indicated by RI#, USB# and LAN, with the incoming wireless control instructions being shown generally at 19.

Figure 3 shows, in a flow diagram manner, how the power state sub-system can be initialised and how a specific identifier (I.D.) may be assigned to a particular computer system.

Under the control of the relevant Operating System (OS), detection software checks whether any appropriate (e.g. IR or RF) receivers are connected. Where no such receiver is found, an error message is generated, although where a relevant receiver is found, the associated port is configured, under software control. The software then initialises the receiver by configuring a hard-coded program (HCP) contained therein, and specifically, by setting an initialisation flag in the HCP memory. This indicates that the receiver is currently in the process of being initialised.

Subsequently, a driver (a serial driver where a serial COM port is used: a USB driver where the USB port is used) is associated with the relevant control signal. In the case of a serial COM port connected receiver, a ring indicator (RI#) signal will be used, whereas a USB# signal will be used where the receiver is connected to a USB port. In effect, this driver association allows the incoming control signals to be understood by the Operating System and hence acted upon in order to effect a change in power state, as described below.

The software then generates and displays a dialogue box indicating that the computer system has adopted a "ready" mode and that the receiver is awaiting a wireless instruction from an appropriate remote control device. Similarly, the system software is awaiting a signal from the serial/USB driver, as appropriate.

In order to complete the initialisation process, a user then presses a particular key (or sequence of keys) on a remote control handset (not shown) with the key or key sequence corresponding to an ID which will be used to effect a change in the power state of a specified computer system. This ID is then sent from the handset to the receiver, and is received and analysed by the receiver's HCP. The HCP passes the thus-analysed ID to a buffer of the appropriate port and generates a RI#/USB# signal, as appropriate. This signal is passed to the Operating System and the serial/USB driver obtains the thus-analysed ID from the buffer. The system software then displays the chosen ID on a screen, and seeks confirmation from the user that the ID is correct. In order to effect this confirmation, the same key or key/sequence is entered into the remote control handset and transmitted to the receiver, in the manner described above. The system software analyses the repeat signal and compares the analysed signal with the ID first received. Where a match is not found, the ID selection steps are repeated. Where a match is found, however, the system software stores the ID in a system registry (e.g. a Windows® Registry) and launches an Application Program Interface (API) that is operative to await a power state control signal emanating from the HCP. In hand with that, the boot process of the system concerned is amended slightly to ensure that the API is run each time the computer system is booted. At the same time, the API sends a command to the HCP for the HCP to store the thus-confirmed ID.

From the above, it will be understood that the use of a plurality of different ID's allows control of selected computer systems to be effected, without the requirement of different transmission frequencies. It will however be appreciated that different systems could be made responsive to different transmission frequencies, if desired.

In order to change the power state of a particular system, the relevant ID is input into the remote handset and the thus-generated instruction is transmitted wirelessly towards the receiver concerned. The HCP of the receiver analyses the instructions and checks whether the thus-analysed ID matches that which is stored in the HCP memory. If no match is found, the ID is designated "not recognised" and no further action is taken.

Where is match is found, and the ID is recognised, the HCP generates a RI# or USB# signal (depending on whether the receiver is connected to the system's serial COM or USB port) with the incoming RI#/USB# signal being intercepted by the appropriate driver and forwarded, using the API, to the ACPI functionality located within the main Operating System. Where the system is found to be "awake" (e.g. in the S0 state) the ACPI is operative to effect a downward transition to a sleep state such as S3. In the S3 state, the system context (e.g. data and application content) is saved to a volatile memory portion (such as the RAM) of the system. Alternatively, a downward transition to an S4 sleep state may be effected, in which case the system context is saved to a non-volatile storage device such as a HDD.

The OS also then informs the chipset of the various signals and events (RI#, USB# or PME, for example) that are intended to wake the system from the sleep state, at some point in the future.

Subsequently, the Operating System instructs the BIOS and chipset to prepare to enter the appropriate sleep state which, in the case of S3, halts operation of the CPU. In the case of S4, the Operating System effects a more thorough "power-off" of the system.

However, where the ACPI finds that the system is in a "sleeping" state (such as S3 or S4), the ACPI is operative to generate a "wake" signal, thus bringing the system up to the S0 working state, for example.

Where an awakening from S3 is effected, the CPU recommences operation: where an S4 awakening occurs, however, power must first be restored to the system. Whichever occurs, the BIOS initially takes control, passing it promptly to the Operating System in the case of an S3 awakening. Where an S4 awakening is effected, the BIOS executes a rapid reboot and then passes control to the Operating System. Where the system has been woken from an S3 or S4 sleep state, the system context (including any open application or uncompleted tasks) is restored, under OS control, meaning that the system is returned to the exact point that it was at when the system entered the S3/S4 sleep state.

In hand with that, the thus-awoken system is rendered "visible" to any network components to which it may be connected, in contrast to its "invisible" status that corresponds to the system's sleep states.

As will be understood from the foregoing, the invention allows selected computer systems to be powered up or down in accordance with a user request, on a wireless remote basis, with the power state of the computer having no influence on the ability of the wireless receiver to initiate the power state change, as the receiver is powered independently of the system concerned.

In hand with that, the invention effectively allows computer system network elements, equipped with appropriately configured wireless receivers, to be added to, or removed from, a network topology by altering their power states and thus whether or not they play any substantial part in network activity.

Thirdly, the remote and wireless operability of the invention allows power state changes to be made to relatively inaccessible systems such as may be found, for example, in industrial workplaces, where the systems may be protected by safety screens and the like.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A computer system, a power state sub-system, operative to change the system's power state, the sub-system having a receiver operative to receive wireless control instructions and a control element operative, in response to such instructions, to effect a change in the system's power state.

2. A sub-system according to Claim 1 wherein the receiver is powered independently of the computer system, whereby its ability to receive control instructions is unaffected by the system's state.

3. A sub-system according to Claim 1 or Claim 2 wherein the change in power state involves a toggle between defined power states.

4. A sub-system according to Claim 1, Claim 2 or Claim 3 wherein the lower power state is one in which the system context is saved.

5. A sub-system according to Claim 4 wherein the system context is saved to a system memory.

6. A sub-system according to any one of the preceding claims wherein the change in the system's power state is effected using a ring indicator, USB or other such power management event signal.

7. A sub-system according to any one of the preceding claims wherein the wireless control instructions include an identifier and wherein the system's power state is only changed where the identifier is recognised.

8. In a plurality of computer systems, a method of changing the power state of a selected system, comprising generating a control instruction and effecting a wireless transmission of the control instruction towards a receiver, whereby a control element, in response to the instruction, effects a change in the selected system's power state, the control instruction including a system identifier such that the power state change is effected in the selected system.

9. A method according to Claim 8 wherein the system identifier is variable in accordance with a user's actions, whereby a user may selectively change the power state of one or more of the systems.

10. A method according to Claim 8 or Claim 9 wherein the control instruction is transmitted using an infrared or a radio frequency carrier.
